# EUROPÄISCHE PATENTSCHRIFT

(11) **EP 1 410 402 B1**
(45) Veröffentlichungstag und Bekanntmachung des Hinweises auf die Patenterteilung: **22.03.2006**
(21) Anmeldenummer: 01964928.4
(22) Anmeldetag: 24.08.2001
(51) Int. Cl.: G21C 15/18, G21C 9/00

(54) **STEUEREINRICHTUNG FÜR EINEN KÜHLKREISLAUF**
CONTROL DEVICE FOR A COOLING CIRCUIT
DISPOSITIF DE COMMANDE POUR UN CIRCUIT DE REFROIDISSEMENT

(30) Priorität: 25.08.2000 DE 10041779
(43) Veröffentlichungstag der Anmeldung: 21.04.2004
(73) Patentinhaber: Forschungszentrum Rossendorf e.V., 01328 Dresden (DE)
(72) Erfinder: WILLSCHÜTZ, Hans-Georg, 01277 Dresden (DE)
(86) Internationale Anmeldenummer: PCT/DE2001/003241
(87) Internationale Veröffentlichungsnummer: WO 2002/017331

(56) Entgegenhaltungen:
- EP-A- 0 419 159
- DE-A- 3 719 062
- US-A- 4 836 443

## Beschreibung

Die Erfindung betrifft eine Steuereinrichtung für einen Kühlkreislauf.
Ein bevorzugtes Anwendungsgebiet der Erfindung ist die Notkühlung eines Reaktordruckbehälters, insbesondere für das Gefäß eines Druckwasserreaktors im Falle einer Kernschmelze.

Es ist bereits eine Anordnung zur Kühlung einer Kernkraftanlage bekannt, die selbsttätig in Abhängigkeit von der Druckdifferenz zwischen dem Kühlmittel und dem Druck im Reaktorgebäude das Kühlmittel zuführt (DE 37 19 062 A 1). Mit dieser technischen Lösung kann eine Fehlauslösung eingeleitet werden.

Es ist auch bekannt, die Temperatur am Reaktordruckgefäß zu messen und bei Überschreiten einer vorgegebenen Schwelle den Wasserzutritt durch Abschmelzen von Schmelzstopfen einzuleiten (A. Schaffrath, H. Ringel, Grundzüge passiver Sicherheitssysteme, in: Neue Entwicklungen in der Kernenergie zur Risikominimierung, Seminar VDI-GET & KTG, Dresden, 11.5.2000). Diese Art der Auslösung des Kühlmittelflusses ist zur Beherrschung eines Störfalles nicht, zumindest nicht allein geeignet.

Der Erfindung liegt die Aufgabe zugrunde, eine Steuereinrichtung für einen Kühlkreislauf vorzuschlagen, die sicher und einfach auch bei einem schweren Störfall eine Kühlung des Reaktordruckbehälters sicherstellt. Dabei soll auf den Einsatz von Fremdenergie verzichtet werden.

Erfindungsgemäß wird die Aufgabe mit den in Patentansprüch 1 dargelegten Merkmalen gelöst.

Zur Abfuhr der großen Wärmemengen, die im Falle einer Kernschmelze mit Bildung eines Kernschmelzesees in der Bodenkalotte des Reaktordruckbehälters entstehen, ist die Flutung der Reaktorgrube eine bekannte Massnahme. Das Problem ist die Sicherstellung einer passiven Auslösung der Flutung der Reaktordruckbehälteraussenseite, die normalerweise trocken ist, d.h. von Luft oder einem Inertgas umgeben ist. Passiv heißt, dass extern gesteuerte zusätzliche Eingriffe in die Anlage oder auf Fremdenergie basierende Mechanismen, wie beispielsweise elektrische Schaltkreise, Sensoren oder Motoren, nicht notwendig sind.

Aufgrund der Thermodynamik eines Schmelzesees findet der größte Wärmeeintrag in die Behälterwand, im oberen Bereich des Pools statt, hier Focusregion genannt. Aufgrund der hohen Temperaturen im Focusbereich weist der Stahl in diesem Bereich die geringste Festigkeit auf. Gleichzeitig muß dieser Wandbereich zwischen Bodenkalotte und Zylinder des Behälters die gesamte Masse der Bodenkalotte und der Schmelze tragen.

Wesentlich größere Lasten werden durch möglicherweise vorherrschende Innendrücke verursacht, die ebenfalls im oberen Bereich der Bodenkalotte bzw. im unteren Bereich des Zylinders zu den höchsten Spannungen führen können.

Aufgrund dieser Bedingungen wird der Behälter in Bereichen hoher Belastung und geringer Festigkeit anfangen sich zu verformen. Weiter unten und oben liegende Bereiche und insbesondere das Zentrum der Bodenkalotte weisen hingegen niedrigere Temperaturen und somit höhere bis sehr hohe Festigkeiten auf.

Die Behälterwand wird im Focusbereich bei vorhandenem Innendruck nach außen ausbeulen. In jedem Fall, also auch ohne zusätzliche Innendruckbelastung, wird die Wand bei entsprechender thermischer Belastung, gleichbedeutend einer geringen Restwanddicke, nach unten gestreckt. Die gesamte Bodenkalotte verlagert sich daher vertikal in Richtung der Schwerkraft.

Die erfindungsgemäße Einrichtung wirkt im regulären Betrieb des Kraftwerks oder in anders gearteten Störfallen, beispielsweise Erdbeben, nicht negativ, d.h. sie wird keine Wirkungsgradverluste im Normalbetrieb oder zusätzliche Gefahrenquellen in jedem anderen Anlagenzustand hervorrufen. Auch werden Fehlauslösungen ausgeschlossen. Außerdem stellt die Einrichtung bei Inspektions- oder Reparaturarbeiten kein Hindernis dar und ist kostengünstig realisierbar. Die einfach aufgebaute, sichere und passiv wirkende Steuereinrichtung kann auf Fremdenergie verzichten.

Die Erfindung wird nachstehend an einem Ausführungsbeispiel für ein hydraulisches System näher erläutert.
In der zugehörigen Zeichnung zeigen
Fig. 1 den unteren Teil eines Stahlbehälters, wie er als Reaktordruckbehälter eingesetzt werden kann, im linken Teil im Ausgangszustand und im rechten Teil mit durch hohe Temperatur und/oder Druckbelastung abgesenkten Bodenteil im Schnitt,

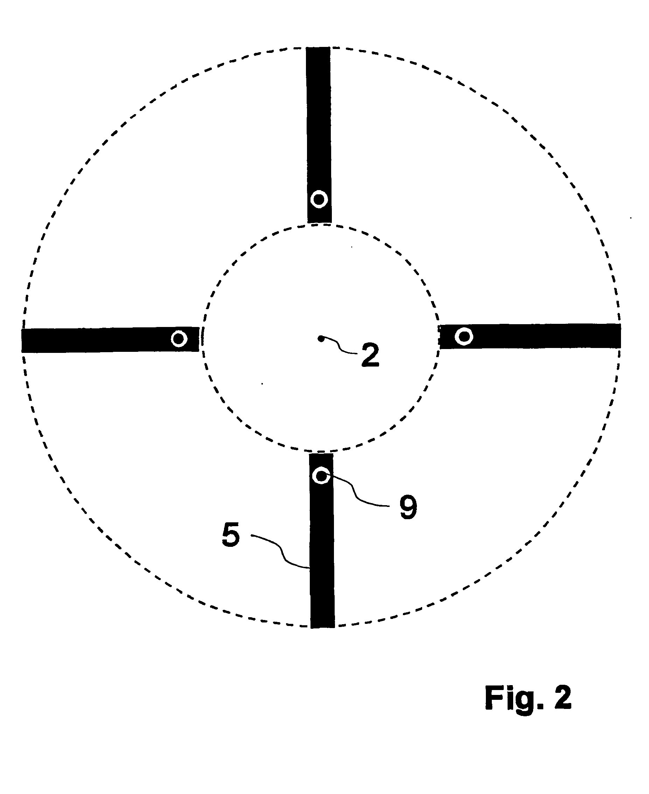

Fig. 2 die Draufsicht auf die unter dem Stahlbehälter angebrachten Teile.

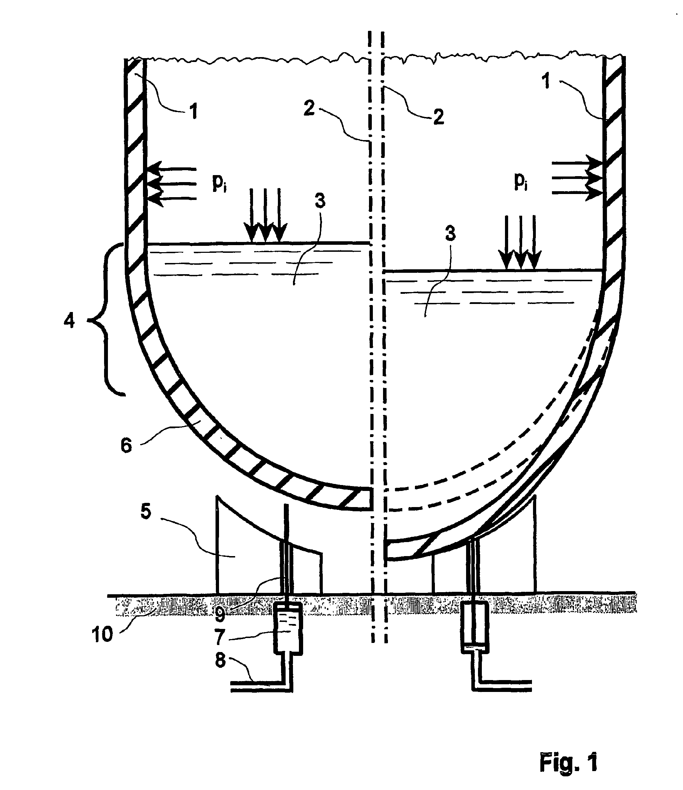

In Fig. 1 ist in der linken Hälfte der Zeichnung ein Ausgangszustand eines Reaktordruckbehälters 1 im Falle einer Kernschmelze dargestellt. Die Rotationssymmetrielinie 2 trennt den linken vom rechten Teil. In der rechten Hälfte der Abbildung ist der Reaktordruckbehälter 1 nach einer Verformung, z.B. nach überhöhter Temperatur- und/oder Druckbelastung dargestellt.
Der Reaktordruckbehälter 1 ist in der Darstellung etwa bis zum Übergang zwischen Bodenkalotte 6 und zylindrischem Teil des Reaktordruckbehälters 1 mit einem Kernschmelzesee 3 gefüllt. Der Bereich 4 kennzeichnet die zu erwartende Focusregion in der Wand des Reaktordruckbehälters 1.
Unter der Bodenkalotte 6 befinden sich vier sternförmig angeordnete Stützscheiben 5, die den Reaktordruckbehälter 1 im regulären Betrieb nicht berühren.
Zur Sicherung günstiger Strömungsverhältnisse werden die vorhandenen Einrichtungen im Bodenbereich des Reaktordruckbehälters 1 in die Anordnung der erfindungsgemäßen Steuereinrichtung einbezogen. So ist in jeder Stützscheibe 5 eine Ausnehmung vorgesehen, unter der je ein Hydraulikzylinder 7 angeordnet ist, der über eine Hydraulikleitung 8 mit den anderen Hydraulikzylindern 7 verbunden ist. Am Hydraulikkolben jedes Hydraulikzylinders 7 ist je ein Stab 9 angebracht, der jeweils durch die Ausnehmung der Stützscheibe 5 ragt. Die Länge der Stäbe 9 ist so bemessen, dass sich ihre dem Hydraulikzylinder 7 abgewandten Enden in gleichem Abstand von etwa 3 cm von der Bodenkalotte 6 des Reaktordruckbehälters 1 in seinem Regelzustand befinden.
Sind die hier angegebenen Stützscheiben 5 nicht vorhanden, kann die vorgeschlagene Steuereinrichtung auch an andere Bauelemente angebracht oder separat aufgebaut werden.

Eine spezielle Ausführungsform ist ein hydraulisches System, das nach dem Prinzip der kommunizierenden Röhren arbeitet. Befindet sich beispielsweise an mehreren Positionen ein Hydraulikzylinder 7, dessen Hydraulikkolben, mit einem Stab 9 verbunden, durch die Kraft der sich vertikal absenkenden Bodenkalotte eingeschoben wird, so steht über die Hydraulikleitungen 8 das gewünschte passive System zur Verfügung. Über definierte Kolbenwege bzw. -abstände und Kolbenquerschnittsflächen läßt sich dieses System so auslegen, dass die auszulösenden Mechanismen nur unter den postulierten Bedingungen ausgelöst werden. D.h. beispielsweise müssen wenigstens zwei Kolben der Stützenanordnung eingeschoben werden, um einen oder mehrere "lnitialkolben" auszufahren, mit denen beispielsweise ein Schott und/oder ein Ventil zum "In-Containment Refueling Water Storage Tank" (IRWST) geöffnet wird.
Durch Auslösen der Flutung erst nach Einschieben von zwei Kolben der Stützenanordnung, d.h. bei Kontakt der Bodenkalotte 6 und mindestens zwei Stützscheiben, kann beispielsweise eine ungewollte Flutung durch Kontakt an einer Stützscheibe 5, z. B. bei Reparaturarbeiten, vermieden werden.

## Patentansprüche

1. Steuereinrichtung für einen Kühlkreislauf, insbesondere zur Aktivierung der Notkühlung eines Reaktordruckbehälters, wobei das Kühlmittel abhängig vom Eintritt eines Ereignisses in das Kühlsystem eingespeist wird, **dadurch gekennzeichnet, dass** unterhalb der Bodenkalotte (6) des Reaktordruckbehälters (1) mindestens ein Stab (9) angeordnet ist, der über ein Übertragungssystem (7,8) mit der Notkühlung verbunden ist und diese aktiviert wobei sich das dem Übertragungssystem abgewandte Ende des Stabes (9) in einem Abstand von etwa drei cm von der Bodenkalotte (6) befindet.

2. Steuereinrichtung nach Anspruch 1, **dadurch gekennzeichnet, dass** als Übertragungssystem ein hydraulisches System eingesetzt ist.

3. Steuereinrichtung nach Anspruch 1 und 2, **dadurch gekennzeichnet, dass** der Stab (9) senkrecht an einem parallel zur Achse des Reaktordruckbehälters (1) angeordneten Hydraulikzylinder (7) angebracht ist, der mit der Notkühlung verbunden ist.

4. Steuereinrichtung nach Anspruch 3, **dadurch gekennzeichnet, dass** mehrere Hydraulikzylinder (7) mit Stäben (9) vorgesehen sind, wobei die Hydraulikzylinder (7) mittels Hydraulikleitungen (8) miteinander verbunden sind.

5. Steuereinrichtung nach Anspruch 4, **dadurch gekennzeichnet, dass** die Hydraulikzylinder (7) derart im Fundament (10) der Reaktorgrube angeordnet sind, dass die Stäbe (9) durch Ausnehmungen vorhandener Bauteile geführt sind.

## Claims

1. Control device for a cooling circuit, in particular for activating the emergency cooling of a reactor pressure vessel, whereby the coolant is fed to the cooling system depending on the occurrence of an event, **characterized in that** beneath the lower head (6) of the reactor pressure vessel (1) at least one rod (9) is provided, which is connected with the emergency cooling by means of a transmission system (7, 8) and activates the latter, whereby the end of the rod (9) facing away from the transmission system is at a distance of approximately three cm from the lower head (6).

2. Control device according to claim 1, **characterized in that** a hydraulic system is used as the transmission system.

3. Control device according to claim 1 and 2, **characterized in that** the rod (9) is attached perpendicularly to a hydraulic cylinder (7) located parallel to the axis of the reactor pressure vessel (1) and connected with the emergency cooling.

4. Control device according to claim 3, **characterized in that** a plurality of hydraulic cylinders (7) with rods (9) is provided, whereby the hydraulic cylinders (7) are connected with each other by means of hydraulic lines (8).

5. Control device according to daim 4, **characterized in that** the hydraulic cylinders (7) are arranged in the foundation (10) of the reactor cavity in such a manner that the rods (9) are guided through recesses of existing components.

## Revendications

1. Dispositif de commande pour un circuit de refroidissement, notamment pour activer le refroidissement de secours d'un caisson sous pression de réacteur, sachant que l'agent de refroidissement est alimenté en fonction de la survenue d'un événement dans le système de refroidissement, **caractérisé en ce qu'**au-dessous de la calotte du fond (6), du caisson sous pression de réacteur (1), il y a au moins une barre (9) qui est reliée par un système de transmission (7, 8) avec le refroidissement de secours et qui active celui-ci sachant que l'extrémité de la barre (9) détournée du système de transmission se trouve à une distance de trois cm environ de la calotte du fond (6).

2. Dispositif de commande selon la revendication 1, **caractérisé en ce qu'**un système hydraulique est utilisé comme système de transmission.

3. Dispositif de commande selon les revendications 1 et 2, **caractérisé en ce que** la barre (9) est posée à la verticale sur un vérin hydraulique (7) qui est disposé parallèlement à l'axe du caisson sous pression de réacteur (1) et qui est relié au refroidissement de secours.

4. Dispositif de commande selon la revendication 3, **caractérisé en ce que** plusieurs vérins hydrauliques (7) avec des barres (9) sont prévus, sachant que les vérins hydrauliques (7) sont reliés entre eux à l'aide de conduites hydrauliques (8).

5. Dispositif de commande selon la revendication 4, **caractérisé en ce que** les vérins hydrauliques (7) sont disposés dans la fondation (10) de la fosse du réacteur de sorte que les barres (9) sont introduites par les évidements des éléments de construction existants.
